# EUROPEAN PATENT SPECIFICATION

(11) **EP 3 556 129 B1**
(45) Date of publication and mention of the grant of the patent: **30.12.2020**
(21) Application number: 17798203.0
(22) Date of filing: 15.11.2017
(51) Int. Cl.: H04W 4/02, H04W 4/70, H04W 4/00, H04W 12/08, H04L 29/06, H04L 29/08, H04W 48/04

(54) **SYSTEM AND METHOD FOR USER AUTHORIZATION**
SYSTEM UND VERFAHREN ZUR BENUTZERAUTORISIERUNG
SYSTÈME ET PROCÉDÉ DESTINÉS À UNE AUTORISATION D'UTILISATEUR

(30) Priority: 15.12.2016 IN 201641042760
(43) Date of publication of application: 23.10.2019
(73) Proprietor: ABB Schweiz AG, 5400 Baden (CH)
(72) Inventor: DE WIJS, Bart, 4921 CS Made (NL); RAO, Nandan, Bangalore 560078 (IN)
(86) International application number: PCT/EP2017/079324
(87) International publication number: WO 2018/108423

(56) References cited:
- WO-A2-02/080084
- US-A1- 2014 277 618
- US-A1- 2015 065 172

## Description

### Technical Field

The present invention generally relates to electronic data processing, and more particularly, relates to computer systems and methods for user authorization. A particular area of use is the Internet of Things (loT) and, more particular, the Industrial Internet of Things (IIoT).

### Background

The loT is the internetworking of physical devices, e.g. vehicles (also referred to as "connected devices" and "smart devices"), buildings and other items, embedded with electronics, software, sensors, actuators, and network connectivity that enable these objects to collect and exchange data. The loT allows objects to be sensed and/or controlled remotely across existing network infrastructure (see https://en.wikipedia.org/wiki/lnternet_of_things). The industrial Internet of Things (IIoT) is the use of the loT technologies in manufacturing. It incorporates machine learning and big data technology, harnessing the sensor data, machine-to-machine communication and automation technologies that have existed in industrial settings for years. This data can enable organizations like companies to pick up on inefficiencies and problems sooner, saving time and money and supporting business intelligence efforts. In manufacturing specifically, IIoT holds great potential for quality control, sustainable and green practices, supply chain traceability and overall supply chain deficiency. IIoT also provides mechanisms to connect industrial devices to a cloud computing platform and to transfer information to the cloud platform for performing various operations such as analytics or data mining on the industrial data. It is obvious from the above that a huge amount of data is or will be collected in the IIoT area and it is also obvious that not every user of the system needs to see or shall be allowed to see each and every data in the system. Since a cloud computing platform by its nature includes data from a large user base, presence of right access controls is vital to the protection of sensitive industrial data. Further, since a cloud computing platform is envisaged as a central repository of data potentially belonging to different stakeholders with different requirements on controlling the access, the ability of providing controlled access to data collected through the entire life time of systems and devices is an important requirement within IIoT.

WO 02/080084 A2 describes a gateway for use in controlling access. Access is made specific to particular criteria, including geographic location.

Role Based Access Control (RBAC) is a mechanism provided by the cloud computing platforms today to address these needs. RBAC attempts to provide granular access controls based on the associated roles of the users. However, the RBAC approach is not enough for finer access control requirements that an IIoT system requires. For example, a user with an assigned role needs to be permitted to view data related to devices only in a certain geographical location and information related to devices in another location needs to be hidden from the same user.

A way of achieving fine grained access control along with the notion of a location or equipment using RBAC approach would result in exponential increase in the number of "roles" and potentially leads to duplication, maintenance problems and erroneous situations failing to protect information in certain situations. Thus, there is a need for a method and/or processing system providing a more efficient user authorization with higher granularity.

### Summary

This problem is addressed by computer systems, methods and computer program products describing different aspects of the present invention as described in the independent claims. A first aspect of the invention is described as a computer system for authorizing a user to process data received from one or more devices. Such computer system may be a stand-alone computing device (e.g., a single PC) as well as a network or Internet-based system of connected computers that provides shared computer processing resources on demand or as an on premise installation. Users can connect to such system via a client application, for example a browser, on a client computer. The client application may alternatively also be provided by the system itself. The computer system has an interface component configured to receive data from one or more devices. Such a device can be, for example, any manufactured product that can connect to a network, for example an intranet or the Internet, and thus can connect to the computer system. The system is provided with an application component configured to receive requests from the user. These requests comprise requests to perform data processing operations on at least a subset of said data. The computer system is provided with a data storage and access component. This component runs on the system and is configured to store and access the data collected from the one or more devices. The system is further provided with one or more evaluation components executable by the system and configured to process said data or any subset thereof. These evaluation components may, for example, provide data analysis capabilities for the user via the application component. This system is further provided with an authorization component configured to provide to the application component authorization information for granting or denying a user access to process at least a subset of said data, said grant or denial being based on user specific data stored in a user directory for a registered user. Grant or denial may be sent to the user via the application component. The user directory may comprise a record for each registered user. Such user record typically contains as user specific information user credentials (name, password etc.), contact information or other relevant user information.

In order to address the aforementioned technical problem, the user-specific data within the scope of this invention comprise data on a geographical location that is associated with the user and data on the type of a device to which data the user is authorized to get access. The geographical location associated with the user may be a location, for which the user has a responsibility within an organization, for example within a company. Said geographical location is not necessarily the location where the user or the organisation resides, but it can be. The term location may refer to a region like Europe, a country, a city, or any other arbitrarily defined smaller or larger region (e.g., a plant building). These user-specific data may be implemented as a part of the user record but may also be stored separately from the user record but still associated with the user.

The authorization component may, for example, be implemented as a RBAC system. Interface component, data storage and access component, evaluation components and authorization component may alternatively also be implemented in whole or in part, as the case may be, as sub components of the application component itself.

A second aspect of the invention is described as a computer implemented method of granting or denying to a client computer, operated by a user, access to process data on a computer system, said data being collected from a plurality of devices. The method can be executed by a computer system as described above: an application running on such computer system receives a request to process said data collected from the plurality of devices. The request is sent by the client computer program running on a client computer operated by the user. The client computer program, e.g. a browser, can also run on the computer system itself. Within the scope of this invention and for simplicity, both alternatives are in the following collectively referred to as "client computer". The application retrieves user-specific data from a user directory. The application then checks, whether said user-specific data match with device specific data and, based on the result of the matching, the application grants or denies to the client computer, i.e. to the user, access to the requested data processing.

A third aspect of the invention is described as a computer implemented method of granting or denying to a client computer operated by a user access to process data on a computer system, said data being collected from a plurality of devices. The method can also be executed by the computer system as described above: an application running on the computer system receives a request to process said collected data. This request is sent by the client computer. The application retrieves data on a geographical location associated with the user and the type of device associated with the user from a user directory. This retrieval can for instance be implemented via the authorization service or by the application directly accessing the user directory. The application retrieves data on the geographical location of the device or the plurality of devices and the type of the device or the plurality of devices the data from which are requested to be processed. Such device specific data can for example be transferred to the computer system when collecting data from the plurality of devices. The retrieval of these device specific data can for example be implemented via a platform service, which is configured to have direct or indirect (via other services) access to the data storage. The application then checks, whether said geographical location of the device and the type of the device match with one or more data on geographical locations and types of device associated with the user in the user directory, and, based on the result of the matching, grants or denies access to the client computer/user to the requested data processing.

A fourth aspect of the invention is described as a computer program product that, when loaded into a memory of a computing device and executed by at least one processor of the computing device, lets the computing device perform as a system according to any of claims 1 to 10, and/or enables the computing device to perform a method as to any one of claims 11 to 14.

Advantageous embodiments of the aforementioned aspects are described in the following sections:
A first advantageous embodiment of the invention is characterized in that said user specific data comprise data about one or more roles the user holds within an organization. The term role describes a set of tasks a user has to do as a member of the organization. It is a common term in the context of RBAC. The mapping of roles to data processing operations allowed for a specific role, may be implemented, for example, by a table in the user directory. In case one or more roles are also assigned to device specific data, i.e. to a device and/or to a type of a device, the application can also check, whether role entries in the user-specific data match with role entries in the device specific data and thus can confine authorization on a further level.
A second advantageous embodiment of the invention is characterized in that the user specific data on the geographical location and the type of the device are coupled to form a first data object. Such first data object is hereinafter alternatively referred to as area of responsibility object (AoR).
A third advantageous embodiment of the invention is characterized in that the first data object and the data on the one or more roles are coupled to form a second data object. Such second data object is herein alternatively referred to as authorization information object or authorization object.

A further advantageous embodiment of the invention is characterized in that a plurality of second data objects are present for a registered user.

A further advantageous embodiment of the invention is characterized in that the plurality of second data objects to form a third data object, which is associated with one registered user. Such third data object is hereinafter alternatively referred to as authorization package.

A still further advantageous embodiment of the invention is characterized in that grant or denial of access is further based on device specific data associated with the data requested to be processed. Such device specific data may comprise data on the geographical location of the device and the type of the device. Such data on geographical locations can be of the same type as described above for the user specific data. The same is true for the type of device data.

A still further advantageous embodiment of the invention is characterized in that the device specific data further comprise time data related to the device. These time data specify the time during which the device resides or has resided in a specific geographical location. The time data may comprise a start date and a start time and an end date and an end time, defining a time period. Such time data may be available for every geographical location where the device resides or has resided.

The respective time periods are not allowed to overlap for locations on the same level, for example locations of the city type. They may overlap for locations on different levels, for example for countries and cities of the respective country. Device specific time data reflect the location history of a particular device. In other words, data about or generated by the particular device at a particular location are associated with a time interval which specifies the time during which the particular device was operated at the particular location. That is, the time data allows for distinguishing data associated with the particular device with regards to various locations based on the time stamps of the respective data.

A still further advantageous embodiment of the invention is characterized in that the device specific data on the geographical location and the type of the device are coupled to form a fourth data object.

A still further advantageous embodiment of the invention is characterized in that a fourth data object and one or more time data are coupled to form a fifth data object.

The one or more time data account for the situation, where a certain device resided on the same location at different times. Such a fifth data object is hereinafter alternatively referred to as location information object.

In a still further advantageous embodiment of the invention, a plurality of location information objects are coupled to form a sixth data object, which is associated with one device. Such sixth data object is hereinafter alternatively referred to as location package object or location package.

Such coupling allows for easy querying or matching processes and may be implemented by structures, classes or other known containers.

In a still further advantageous embodiment of the invention access to the requested data processing is granted or, alternatively, is only granted when, in case the requested data to be processed have one or more time values associated, the associated one or more time values match with the time data related to the device.

For example: if the request for data processing contains a query for a specific device in a specific location in a specific year, access is granted, or only granted, if the specific device recited in the specific location in the specific year.

A still further advantageous embodiment of the invention is characterized in that the application retrieves data on one or more roles associated with the user from a user directory. Further, the application retrieves data on one or more roles associated with the requested data processing and, before granting access to the requested data processing, the application checks whether the data on the one or more roles associated with the user match with the data on the one or more roles associated with the requested data processing.

In a still further advantageous embodiment of the invention, the application queries a third data object (authorization package) and retrieves authorization information from one or more of the second data objects contained in the third data object. The application then checks, whether the data on the geographical location and the type of the device of the plurality of devices associated with the requested data processing match with the retrieved authorization information. Based on the result of the matching, access to the requested data processing is granted or denied.

In other words, the invention is characterized in that the application, in order to check whether the geographical location and the type of device match with one or more data on geographical location and type of device associated with the user, queries a third data object (authorization package) and checks whether the data on the geographical location and the type of the device of the plurality of devices associated with the requested data processing match with the data in one or more of the second data objects (authorization information) contained in the third data object.

In a still further advantageous embodiment of the invention the application may additionally check whether one or more roles associated with the requested data processing match with the data in one or more of the second data objects contained in the third data object.

In a still further advantageous embodiment of the invention, the application, in case the requested data to be processed have one or more time values associated, further identifies time data related to the plurality of devices. The application then grants the client computer access, if the associated one or more time values match with the time data related to the device.

In a still further advantageous embodiment of the invention, device specific data comprising location data, type data and time data are retrieved from a location package object associated with the respective device.

The different aspects of the invention and the advantageous embodiments allow fine grained access controls to information in computer systems, particularly in cloud based IIoT systems. The authorization component is introduced as a component in the computer system that works together with the application, APIs, user directory and other services in the computer system to provide services on authorization based on a combination of roles and AoR. The authorization component manages the authorization package and helps to abstract the concept of authorization from different parts of the computer system. The proposed systems and methods are less cumbersome and less error-prone and require less memory space when compared to the RBAC approach, since the number of roles in RBAC systems would explode and would become unmanageable. More importantly, systems and methods according to the invention reduce the probability that access is unintentionally granted to areas where it should not be granted, thereby also reducing the probability of leakage of information or other types of incidents. The invention also assists in auditing and failure analysis as more relevant information about the associated areas and access would be available, when an application or a service stores access or authorization data in a log file.

### Brief Description of the Drawings

Figure 1 is a simplified computer system according to an embodiment of the invention.
Figure 2 is a simplified authorization package according to an embodiment of the invention.
Figure 3 is a simplified user record according to an embodiment of the invention.
Figure 4 is a simplified schema for defining an AoR according to an embodiment of the invention.
Figure 5 is a simplified example of an AoR according to an embodiment of the invention.
Figure 6 is a simplified location package according to an embodiment of the invention.
Figure 7 is a simplified flowchart of an authorization process according to an embodiment of the invention.
Figure 8 is a simplified swim lane diagram for a process of adding an authorization package object to a computer system according to an embodiment of the invention.
Figure 9 is a simplified swim lane diagram for a process of modifying an authorization package object according to an embodiment of the invention.
Figure 10 is a simplified swim lane diagram for an authorization process to a computer system according to an embodiment of the invention.
Figure 11 is a simplified swim lane diagram of an authorization process, in which authorization fails.
Figure 12 is a simplified swim lane diagram of a second authorization process in which authorization fails.
Figure 13 is a simplified swim lane diagram of an authorization process including time information according to an embodiment of the invention.
Figure 14 is a simplified swim lane diagram of an authorization process including time information according to an embodiment of the invention in which authorization fails.

### Detailed Description

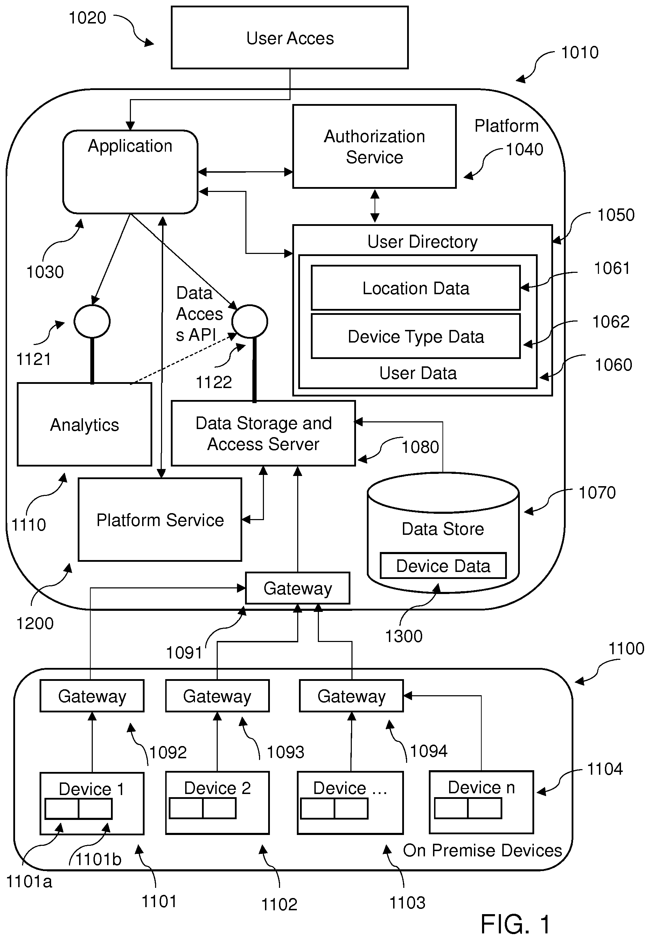

Figure 1 is an example of a simplified computer system 1010 according to an embodiment of the invention. The computer system 1010 is operated by a user through a client computer 1020. System 1010 denotes a simplified view of an IIoT network architecture, useful for the purposes of this invention. It is not intended to be a full-scale representation of an IIoT architecture. An IIoT system may connect to on premise devices (or vice versa), that belong to an industrial system domain. These devices may produce information useful for the IIoT system. In the example, an industrial domain 1100 comprises a plurality of n devices denoted 1101 two 1104. These devices connect to a gateway 1091 of system 1010 via gateways 1092 to 1094 and send information, for example 1101a and 1101b, respectively, to a data storage and access server 1080 of system 1010. This information may inter alia comprise information on the geographical location and on the type of the device. They are stored as device data 1300 in the data store 1070 of system 1010. System 1010 includes an analytics component 1110, which is configured to provide data analysis capabilities. The analytics component 1110 has access to the device data 1300 by means of a data access API 1122, which is part of the data storage and access server 1080. System 1010 further includes an application component 1030, which is configured to interact with client computer 1020 and provides data processing services for client computer 1020. Application 1030 is configured to interact with analytics component 1110 and data storage and access server 1080 via APIs 1121 and 1122. Application 1030 provides means to interpret, analyze and make decisions on the data collected. This data may be sensitive as it can influence business decisions and the access to the information needs to be strictly controlled in the fine grained fashion, if the sensitivity of the data requires to do so. Typically, there is a vast number of users and corresponding client computers 1020. However, not every user can be allowed to access all parts of the available data. To address this problem, a user directory 1050 provides means to store user-specific data 1060, which comprise data on the geographical location of the user 1061 and data on the type of the device 1062 to which data the user can get access. System 1010 further includes an authorization service 1040, configured to provide to application 1030 information on the user-specific data 1060 in the user directory 1050. Authorization service 1040 is further configured to provide information on roles and permissions applicable to the roles of the user. Using this information, application 1030 can grant or deny to a client computer 1020 access to the requested data processing operations. In case of grant, application 1030 can request a platform service 1200 to perform data processing operations based on the user-specific data 1060. Device specific data may also be retrieved by the platform service 1200. Authorization service 1040 can be a separate service as shown in the figure, but can also be a module built in the application 1030. "Get/has access to" in this context means that a user is granted access to all (requested) data processing operation related to the device data.

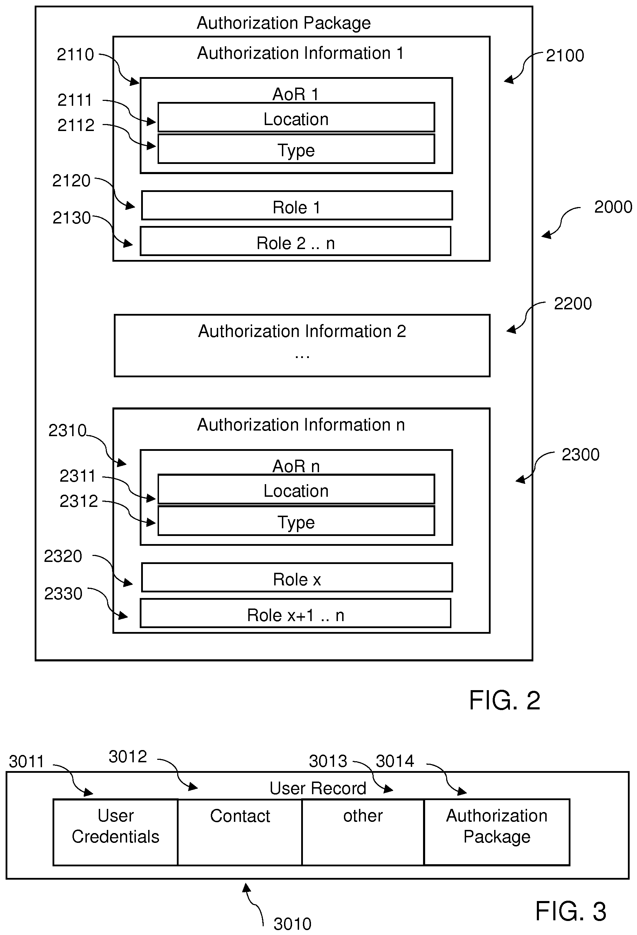

Figure 2 shows as an exemplary embodiment of the invention a third data object, an authorization package 2000, for storing user-specific information in the user directory 1050. Authorization package 2000 contains one to n authorization information objects 2100, 2200, 2300, each of which contains a first data object 2110, 2210, 2310, defining area of responsibility (AoR), and 1 to n data objects 2120, 2130 describing roles the user holds within an organization or that is associated with the user. The AoRs contain data objects on the geographical location of the user 2111 and on the type of device 2112 for which the user may get access. The authorization package 2000 is a container, for example implemented in XML. Containers of other programming languages (e.g. C++) may be used alternatively. Each authorization information object shall be unique within a container and there shall be at least one authorization information object in one authorization package. Each user may have one authorization package 2000 associated. Authorization package 2000 may be stored in a transparent attribute in the user record for every user. An example is given in figure 3.

Figure 3 shows an exemplary structure of a user record 3010 according to the invention. User record 3010 comprises user credentials 3011 (e.g. name, password), contact information 3012 (e.g. address and the like), other information 3013 and an authorization package 3014.

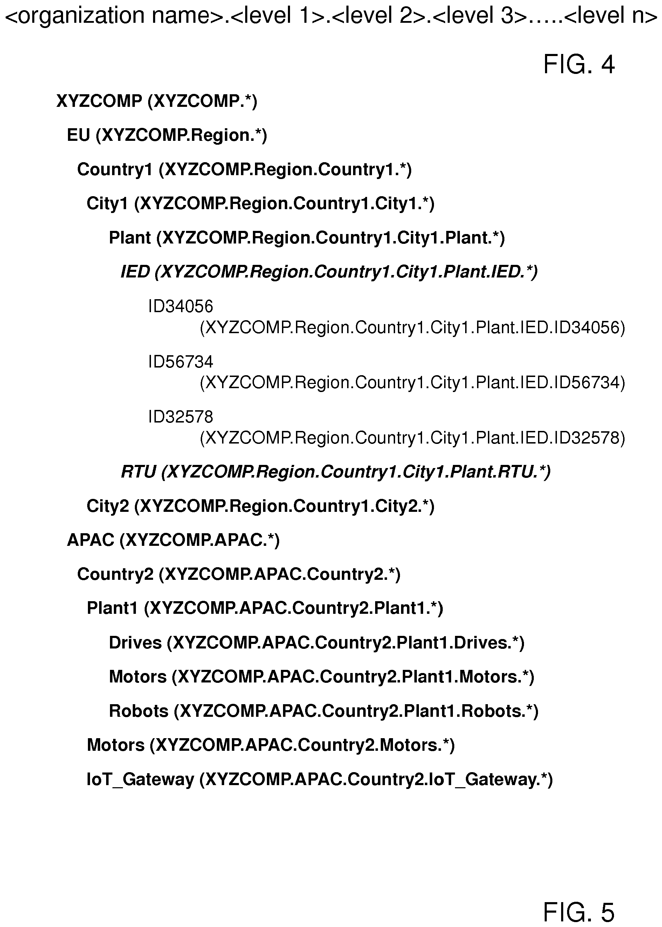

Figures 4 and 5 give an example on how to define an area of responsibility (AoR). AoR may be defined using a name space starting with the organization's name as shown in figure 4. Organization name therein represents the name space for the AoR and the subsequent area levels represent the hierarchies applicable for the business operations of the organization. An example of an AoR definition using XML is given in figure 5. The example shows two cases of configuring AoR: location based and device type based. In case of location based configuration (XYZCOMP.Region.*), the AoR name space in the example contains hierarchies based on the country, a city plant and device level. If a user is assigned a role in XYZCOMP.EU.*, that user has the rights to access data operation processes for data related to devices located in all of the cities and plants in the XYZCOMP.EU hierarchy. In case of equipment type based configuration, (XYZCOMP.APAC.*), the AoR namespace contains hierarchies based on the equipment types belonging to an organization. For example, the namespace "XYZCOMP.APAC.Country2.Motors.*" allows usage access to all data operation processes relating to "Motor" equipment belonging to "XYZCOMP.APAC.Country2" namespace. Additionally, a combination of location and device type is possible as illustrated in "XYZCOMP.APAC.Country2.Plant1.Robots.*" namespace. This allows access rights to all data operation processes relating to "Robots" in a specific "Plant1" located in APAC/Country2 location. A "*" is used as a wildcard character to denote everything below the hierarchy in a namespace. For example, XYZCOMP.* denotes an AoR representing all countries, locations, plants, equipment types, etc. belonging to the "XYZCOMP" namespace. The AoR determines finer controls for access to the user. Together with an associated Role, the AoR determines to which part of the information the user has access to.

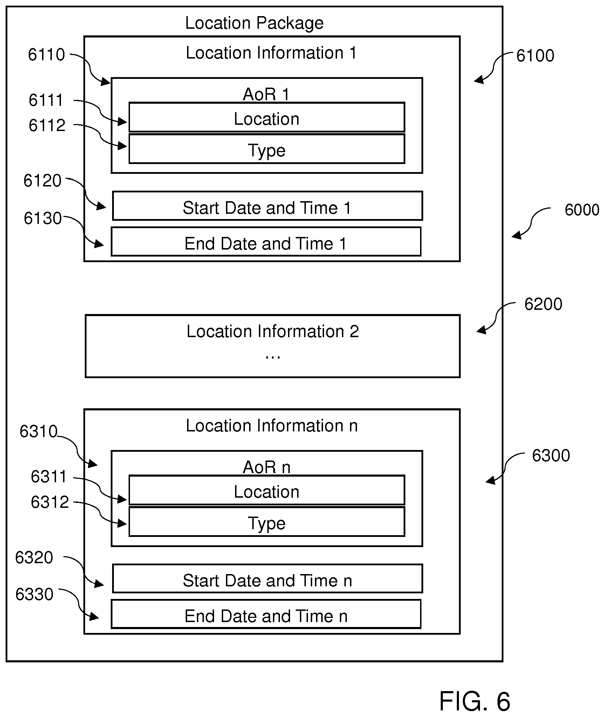

Figure 6 shows, as an exemplary embodiment of the invention, a sixth data object, a location package 6000 comprising device specific data. Location package 6000 contains one or more location information objects 1 to n, 6100, 6200, 6300. The location information objects contain, like in figure 2, AoR objects 6110, 6310. The AoR objects contain data objects 6111, 6311 on the geographical location, where the respective device resides, and data on the type of the device 6112, 6312. The one or more location information objects 6100, 6200, 6300 further comprise time data related to the device. The time data comprise a start date and time object 6120, 6320, respectively, and an end date and time object 6130, 6330, respectively. Both time data define a time period during which a device resides or has resided in a particular location. While a location package 6000 may have multiple location information objects having location and time information denoting a movement of the device over different geographical locations, there shall be no overlap in terms of time periods when the location information is different. This means, that the device cannot reside at different locations at the same time. In case an end date and time is not yet available, and date and time objects may be empty or open. A device may have one location package 6000 assigned. It may be stored in the meta data of the device, for example in device data 1300 in data store 1070. A platform service 1200 may be periodically updated or informed about the devices location information, including previous and current location, along with the time information and this information may be maintained in the computer system for use by the authorization service 1040 or the application 1030, as the case may be. The location package may also be implemented as a container, for example using XML. An application may deny access to operations if the combination of AoR and roles of the user in the authorization package do not match with the AoR of the device along with the duration information in the location package.

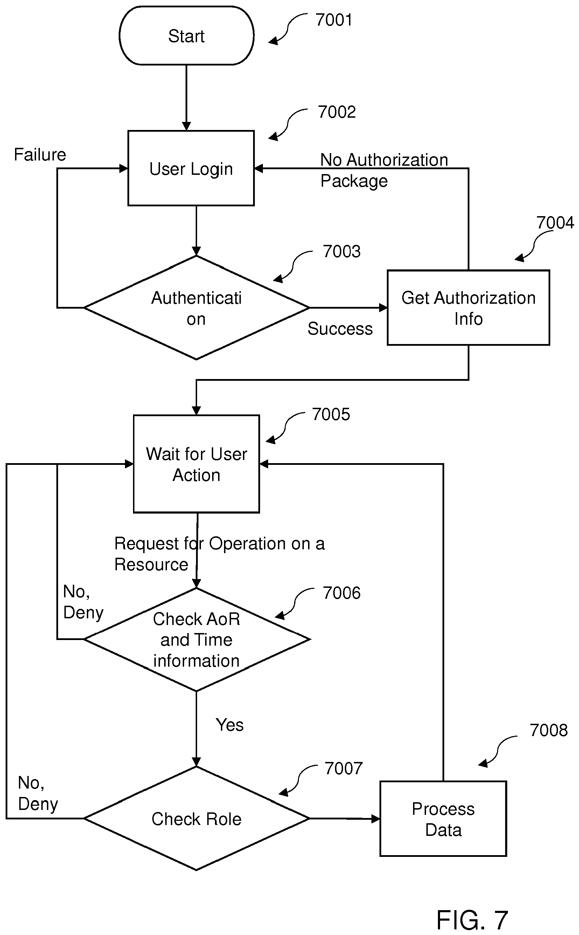

Figure 7 shows as an embodiment of the invention a simplified flowchart for performing authorization considering a combination of AoR and roles for user initiated actions. After a starting step 7001 there is a conventional user login 7002 to an application in a computer system followed by a conventional authentication 7003. In case of success, the application checks in step 7004, whether an authorization package according to the invention is available and, if yes, retrieves AoR and the role information associated with the AoR in the authorization information object and then waits for a user action in step 7005. If the user requests for a data processing operation 7008 (for example read data) on data related to one or more devices, the application retrieves in step 7006 the AoR associated with the or each device on which data the operation is requested and then checks, whether the same AoR is present in any of the authorization information objects of the authorization package of the user. In a further embodiment, the application additionally checks in step 7006, whether the time duration of requested data falls in the range of the time information associated with the AoR for the requested device. The application then checks in step 7007, whether the associated roles retrieved in step 7004 provide permissions to perform the requested operation. This information may be retrieved from a role description object available in the user directory. If this step succeeds, then the operation 7008 is allowed to be performed. Otherwise, operation 7008 is denied and a suitable error message is shown to the user.

In a further embodiment of this process, operation 7008 would be allowed to data corresponding to the time information associated with the AoR. If the operation 7008 is requested on data belonging to a different time period, then the operation is not be permitted.

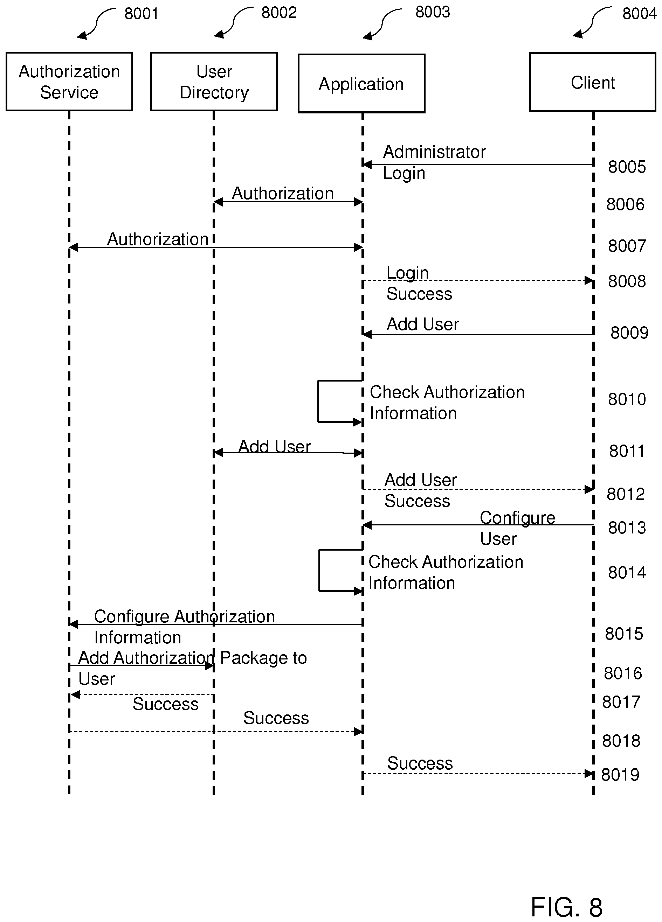

Figure 8 shows, as an embodiment of the invention, a simplified swim lane diagram describing a process of adding to a computer system a new user including an authorization package according to the invention. The computer system may be one as described in figure 1. It is provided at least with an authorization service 8001, a user directory 8002 and an application 8003. It is accessed by a client 8004. In this example the system is accessed by an administrator user via client 8004. The administrator user is configured with roles and AoR supporting administrative operations like the addition/deletion of users in the user directory 8002. The resource on which the operation is performed is the user directory, since a new user record and an authorization package is created and saved in the user record. In step 8005 the administrator user sends via client 8004 an administrator login request to application 8003. Application 8003 performs authentification of the user from the user directory 8002 in step 8006 and retrieves the authorization information for the user from the authorization service 8001 in step 8007. A login success message is provided to client 8004 in step 8008. Client 8004 sends new conventional user data like user credentials of the new user to application 8003 in step 8009. After checking the authorization information from step 8007 in step 8010 to ensure that the administrator user is authorized to add a new user to the user directory 8002, application 8003 adds a new user record to the user directory 8002 in step 8011. A success message is provided in step 8012. In step 8013 client 8004 sends AoR data and role data as further user-specific data of the new user, particularly as authorization information to application 8003. After a check of the authorization information in step 8014, application 8003 sends in step 8015 the authorization information to authorization service 8001, who configures an authorization package with this information and adds this new authorization package to the user record in user directory 8002 in step 8016. Success messages 8017, 8018, 8019 complete the process.

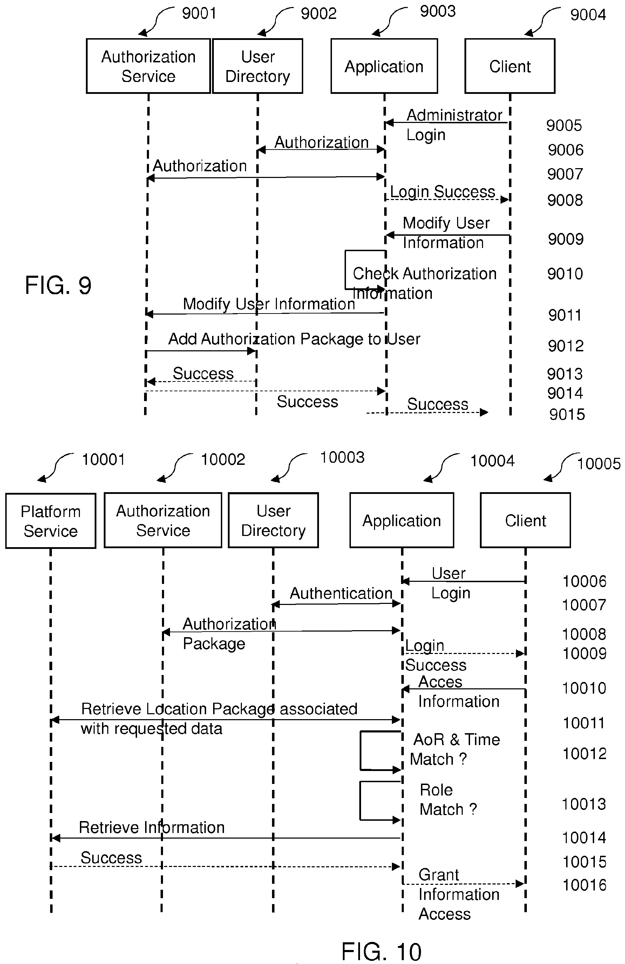

Figure 9 shows, as an embodiment of the invention, a simplified swim lane diagram describing a process of modifying an authorization package of a user. A computer system like the one as described in figure 1 is provided with at least and authorization service 9001, a user directory 9002 and an application 9003. The system is accessed by an administrator user via a client 9004 (compare figure 8). Login steps 9005, 9006, 9007, and 9008 are identical to the login steps described in figure 8. After successful login client 9004 sends modification information to application 9003 in step 9009. Application 9003 checks in step 9010 whether the administrator user is authorized to modify a user information and, if so, sends in step 9011 the modification information to the authorization service 9001, which then adds the modified authorization package to the user directory 9002 in step 9012. Success messages 9013, 9014 and 9015 complete the process.

Figure 10 shows, as an embodiment of the invention, a simplified swim lane diagram describing a process of authentication and authorization for performing data processing operations on a computer system according to the invention. The computer system may be a one as described in figure 1. It is at least provided with a platform service 10001, an authorization service 10002, a user directory 10003 and an application 10004. It is accessed by a client computer 10005. As initial step 10006, a user performs a login to application 10004 via client computer 10005. After conventional authentication 10007 application 10004 requests authorization service 10002 to retrieve the authorization package for the requesting user in step 10008. Login success is provided in a step 10009. After successful login, in step 10010, the user sends information on the data he wants to access to application 10004, wherein the data include device information and time information, for example a device type and a specific year or a specific time period. Application 10004 then retrieves one or more location packages associated with the requested data to be accessed from platform service 10001 in step 10011. Application 10004 then checks in step 10012 whether the AoR data and the time data in the location packages match with the AoR data in the authorization package and the time data received in step 10010. If this check is successful, application 10004 checks in step 10013, whether the role data in the location package match with the role data in the authorization package. If this check is successful, application 10004 retrieves the requested information from the platform service 10001 in step 10014 and, after a success message 10015, grants the client 10005 access in step 10016. It is to be noted that the order in which the AoR matching checks and the role matching checks are performed is not relevant.

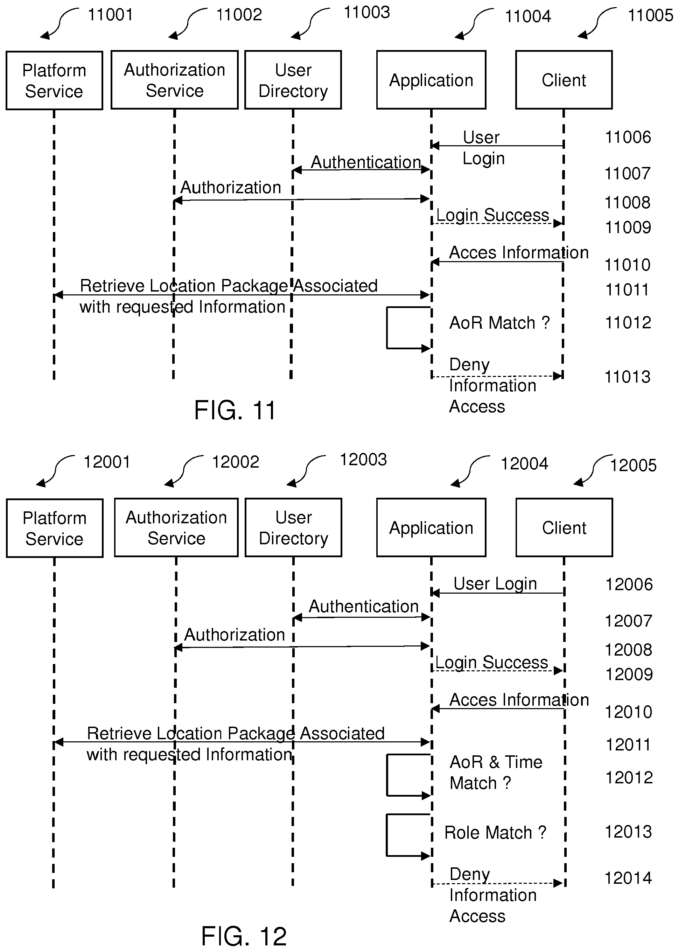

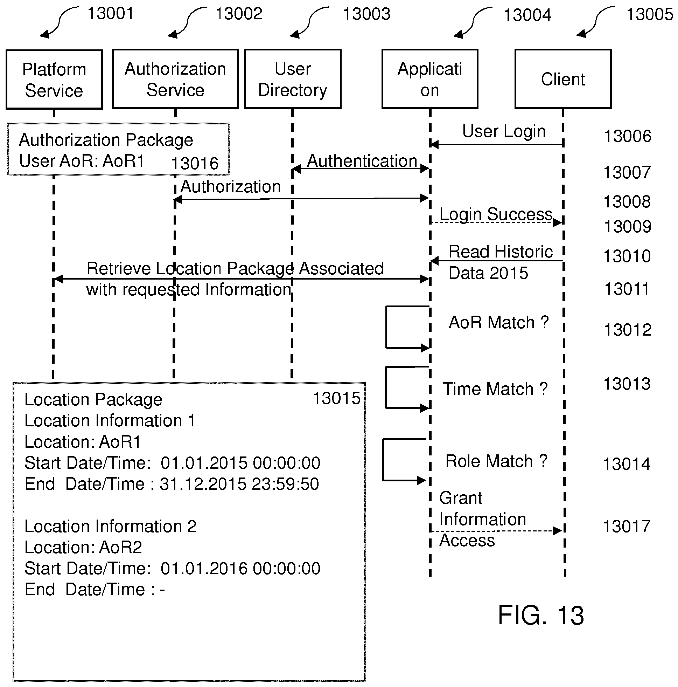

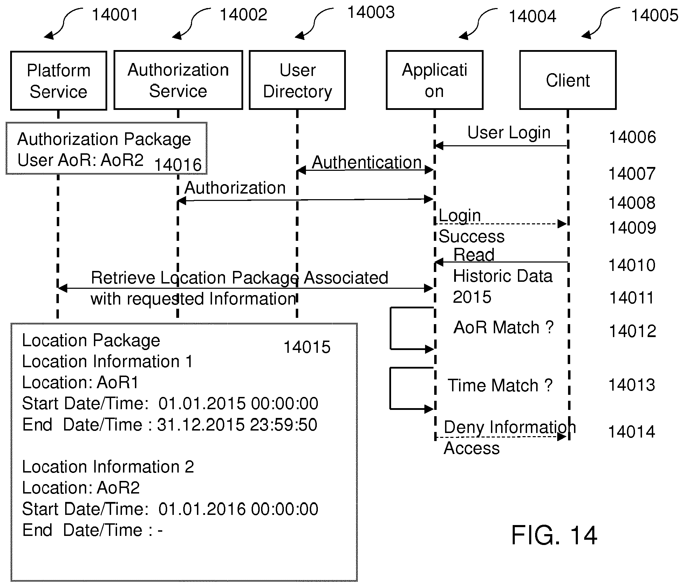

Figure 11 shows, as an embodiment of the invention, a simplified swim lane diagram describing a process of authentication and authorization for performing data processing operations on a computer system as already described in figure 10. There is a platform service 11001, an authorization service 11002, a user directory11003, an application 11004 and a client 11005. After login 11006, authentication 11007, authorization 11008 and success message 11009, the user provides the access information 11010 (see 10010 in figure 10). Such access 11010 information may comprise time data describing a time or a time period, to which the requested data should belong. For example: data for a specific device X in a certain year X (described in more detail in figures 13 and 14). After retrieval of the one or more location packages (11011), Application 11004 then checks in step 11012 whether the AoR data and, if AoR data match, the time data in the location package of device X match with any of the AoR data in the authorization package of the user and the time data received in step 11010. Since the AoR data do not match in this example, application 11004 denies access to the information in step 11013 with no regard to time or role information.

Figure 12 shows as an embodiment of the invention a simplified swim lane diagram describing the continuation of the process described in figure 11 in case matching step 11012 is successful. System and numbering is identical except that the numbering in figure 12 starts with 12001 instead of 11001. In this example, the roles of the associated user AoR do not grant permission to perform the requested operation on the information 12013. Thus, access is denied in step 12014.

Figure 13 shows as an embodiment of the invention a simplified swim lane diagram describing a process of authentication and authorization for performing data processing operations on a computer system, wherein data processing is requested on historic data, e.g. from the year 2015. The components of the system are the same as already described in the previous figures: platform service 13001, and authorization service 13002, a user directory13003, an application 13004 and a client 13005. Numbering starts with 13001 instead of 12001. After login 13006 and authentication13007, application 13004 retrieves an authorization package 13016 via the authorization service 13002. Authorization package 13016 contains as user AoR AoR1. Then, the user requests to read historic data from the year 2015 in step 13010. Application 13004 then retrieves a location package 13015 associated with the requested historic data in step 13011. Application 13004 then checks in step13012, whether any of the AoR data in the location package 13015 match with any of the AoR data in the authorization package 13016. Since both packages contain an AoR1, this matching is successful and the application can proceed to the time matching step 13013. Since the time period associated with AoR1 coincidences with the requested year 2015, this matching is successful, too. Thus, application 13004 checks in a subsequent step 2014, whether the roles of the associated user AoR do grant permission to perform the requested operation 13010, i.e. to access the requested data. If the operation is permitted, application 13004 grants access to the requested information in step 13017.

Figure 14 shows as an embodiment of the invention a simplified swim lane diagram describing a process nearly identical to the process as described in figure 13. The difference is that the user has an AoR2 assigned in his authorization package 14016. The system is the same, however, numbering starts with 14001 instead of 13001. Although AoR matching in step 14012 is successful, because location package 14015 comprises an AoR2 location, time matching in step 14013 fails, because the - open - time period in the location information 2 has a start date of January 1, 2016, which is outside the requested year 2015. Therefore, access is denied in step 14014.

## Claims

1. A computer system (1010) for authorizing a user (1020) to process data received from one or more devices (1101, 1102, 1103, 1104) comprising:
- an interface component (1091) configured to receive said data,
- an application component (1030) configured to receive requests from the user (1020), wherein said requests comprise one or more requests to perform data processing operations on at least a subset of said data,
- a data storage and data access component (1070, 1080) configured to store and access said data,
- one or more evaluation components (1030, 1110) configured to process said data and
- an authorization component (1040) configured to grant or deny to the user (1020) access to process at least a subset of said data, said grant or denial being based on user-specific data stored in a user directory (1050) for a registered user, and further being based on device-specific data related to said requested data,
wherein said user-specific data comprise:
- data on a geographical location (1061) associated with the user (1020) and data on the type of a device (1062) to which type the user is authorized to get access, and
wherein said device-specific data comprise:
- device-specific data on the geographical location and the type of the device of the plurality of devices, and
- device-specific time data reflecting the location history of one or more respective particular devices via time intervals specifying the time during which the one or more particular devices were operated at respective particular locations;
the authorization component further configured to check whether said device-specific geographical location and type of device match with respective user-specific data, and to check if the requested data to be processed have associated time intervals matching with the device-specific time data, wherein access to the requested data is granted for requested data in time intervals associated with the user-specific data.

2. The system of claim 1, wherein said user specific data comprise data about one or more roles (2120, 2130) the user holds within an organization.

3. The system of claim 1 or 2, wherein the user specific data on the geographical location and the type of the device are coupled to form a first data object (2110).

4. The system of claim 3, wherein the first data object (2110) and the data about the one or more roles (2120, 2130) are coupled to form a second data object and wherein a plurality of second data objects (2100, 2200, 2300) are associated with the registered user.

5. The system of claim 4, wherein the plurality of second data objects (2100, 2200, 2300) are coupled to form a third data object (2000) associated with one registered user.

6. The system of claim 3, wherein time intervals in the device-specific data of a particular device are not allowed to overlap for geographical locations on the same level in a hierarchy of first data objects.

7. The system of any of the previous claims, wherein the device specific data on the geographical location and the type of the device are coupled to form a fourth data object (6110).

8. The system of claim 7, wherein the fourth data object (6110) and one or more time data are coupled to form a fifth data object (6100) and wherein a plurality of fifth data objects (6100, 6200, 6300) are coupled to form a sixth data object (6000) associated with one device.

9. A computer implemented method of granting or denying to a client computer (1020), operated by a user, access to process data on a computer system (1010), said data being collected from a plurality of devices (1101, 1102, 1103, 1104), the method comprising steps:
a) an application (1030, 10004) receiving a request (10010) to process said data, said request (10010) being sent by the client computer (1020, 10005),
b) the application (1030, 1004) retrieving user-specific data on a geographical location (1061) associated with the user and the type of device (1062) associated with the user (1020) from a user directory (1050, 10003)
c) the application (1030, 10004), in relation to the requested data, retrieving (10011) device-specific data on the geographical location and the type of the device of the plurality of devices, and further retrieving device-specific time data reflecting the location history of one or more respective particular devices via time intervals specifying the time during which the one or more particular devices were operated at respective particular locations,
d) the application (1030, 10004) checking (10012), whether said device-specific geographical location and type of device match with respective user-specific data, and checking if the requested data to be processed have associated time intervals matching with the device-specific time data, and based on the result of the matching,
e) granting or denying (10016) to the client computer (1020, 10005) access to the requested data processing wherein access to the requested data is granted for time intervals associated with the user-specific data.

10. The method of claim 9 further comprising:
- the application (1030, 10004) retrieving data on one or more roles (2120) associated with the user (1020) from a user directory (1050, 10003),
- the application (1030, 10004) retrieving data on one or more roles associated with the requested data processing and, before granting or denying access to the requested data processing,
- the application (1030, 10004) checking whether the data on the one or more roles (2120) match with the data on the one or more roles associated with the requested data processing.

11. The method of claim 9 or 10 comprising:
- the application in step d) querying a third data object (2000) according to claim 5 and checking whether the data on the geographical location and the type of the device of the plurality of devices and the data on the one or more roles associated with the requested data processing match with the data (2110, 2120, 2130) in one or more of the second data objects (2100, 2200, 2300) contained in said third data object (2000).

12. The method of any of the claims 9 to 11, wherein time intervals in the device-specific data of a particular device are not allowed to overlap for geographical locations on the same level in a hierarchy of first data objects with first data objects coupling the user-specific data on the geographical location and the type of the device.

13. A computer program product that when loaded into a memory of a computing device and executed by at least one processor of the computing device enables the computing device to perform a method according to any one of claims 9 to 12.

## Patentansprüche

1. Computersystem (1010) zur Autorisierung eines Benutzers (1020), Daten, die von einer oder mehreren Vorrichtungen (1101, 1102, 1103, 1104) empfangen werden, zu verarbeiten, umfassend:
- eine Schnittstellenkomponente (1091), die dazu ausgelegt ist, die Daten zu empfangen,
- eine Anwendungskomponente (1030), die dazu ausgelegt ist, Anforderungen von dem Benutzer (1020) zu empfangen, wobei die Anforderungen eine oder mehrere Anforderungen umfassen, um Datenverarbeitungsoperationen an mindestens einer Teilmenge der Daten durchzuführen,
- eine Datenspeicher- und Datenzugriffskomponente (1070, 1080), die dazu ausgelegt ist, die Daten zu speichern und auf die Daten zuzugreifen,
- eine oder mehrere Auswertungskomponenten (1030, 1110), die dazu ausgelegt sind, die Daten zu verarbeiten, und
- eine Autorisierungskomponente (1040), die dazu ausgelegt ist, dem Benutzer (1020) Zugriff zu gewähren oder zu verweigern, um zumindest eine Teilmenge der Daten zu verarbeiten, wobei die Gewährung oder Verweigerung auf benutzerspezifischen Daten basiert, die in einem Benutzerverzeichnis (1050) für einen registrierten Benutzer gespeichert sind, und ferner auf vorrichtungsspezifischen Daten basiert, die sich auf die angeforderten Daten beziehen,
wobei die benutzerspezifischen Daten umfassen:
- Daten über einen dem Benutzer (1020) zugeordneten geographischen Ort (1061) und Daten über den Typ einer Vorrichtung (1062), zu deren Typ der Benutzer autorisiert ist, Zugriff zu erhalten, und
wobei die vorrichtungsspezifischen Daten umfassen:
- vorrichtungsspezifische Daten über den geographischen Ort und den Typ der Vorrichtung der mehreren Vorrichtungen, und
- vorrichtungsspezifische Zeitdaten, die den Verlauf des Ortes einer oder mehrerer jeweiliger spezifischer Vorrichtungen über Zeitintervalle reflektieren, die die Zeit angeben, während der die eine oder mehreren bestimmten Vorrichtungen an jeweiligen spezifischen Orten betriebsbereit waren;
wobei die Autorisierungskomponente ferner dazu ausgelegt ist, zu prüfen, ob der vorrichtungsspezifische geographische Ort und der Typ der Vorrichtung mit jeweiligen benutzerspezifischen Daten übereinstimmen, und zu prüfen, ob die angeforderten zu verarbeitenden Daten zugeordnete Zeitintervalle aufweisen, die mit den vorrichtungsspezifischen Zeitdaten übereinstimmen, wobei der Zugriff auf die angeforderten Daten für die angeforderten Daten in Zeitintervallen gewährt wird, die den benutzerspezifischen Daten zugeordnet sind.

2. System nach Anspruch 1, wobei die benutzerspezifischen Daten Daten über eine oder mehrere Rollen (2120, 2130) umfassen, die der Benutzer innerhalb einer Organisation innehat.

3. System nach Anspruch 1 oder 2, wobei die benutzerspezifischen Daten über den geographischen Ort und den Typ der Vorrichtung gekoppelt sind, um ein erstes Datenobjekt zu bilden (2110).

4. System nach Anspruch 3, wobei das erste Datenobjekt (2110) und die Daten über die eine oder mehrere Rollen (2120, 2130) gekoppelt sind, um ein zweites Datenobjekt zu bilden, und wobei dem registrierten Benutzer mehrere zweite Datenobjekte (2100, 2200, 2300) zugeordnet sind.

5. System nach Anspruch 4, wobei die mehreren zweiten Datenobjekte (2100, 2200, 2300) gekoppelt sind, um ein drittes Datenobjekt (2000) zu bilden, das einem registrierten Benutzer zugeordnet ist.

6. System nach Anspruch 3, wobei sich Zeitintervalle in den vorrichtungsspezifischen Daten einer bestimmten Vorrichtung für geographische Orte auf derselben Ebene in einer Hierarchie erster Datenobjekte nicht überlappen dürfen.

7. System nach einem der vorhergehenden Ansprüche, wobei die vorrichtungsspezifischen Daten über den geographischen Ort und den Typ der Vorrichtung gekoppelt sind, um ein viertes Datenobjekt (6110) zu bilden.

8. System nach Anspruch 7, wobei das vierte Datenobjekt (6110) und eine oder mehrere Zeitdaten gekoppelt sind, um ein fünftes Datenobjekt (6100) zu bilden, und wobei mehrere fünfte Datenobjekte (6100, 6200, 6300) gekoppelt sind, um ein sechstes Datenobjekt (6000) zu bilden, das einer Vorrichtung zugeordnet ist.

9. Computerimplementiertes Verfahren, um einem Client-Computer (1020), der von einem Benutzer betrieben wird, Zugriff auf Prozessdaten auf einem Computersystem (1010) zu gewähren oder zu verweigern, wobei die Daten von mehreren Vorrichtungen (1101, 1102, 1103, 1104) gesammelt werden, wobei das Verfahren folgende Schritte umfasst:
a) eine Anwendung (1030, 10004), die eine Anforderung (10010) empfängt, die Daten zu verarbeiten, wobei die Anforderung (10010) von dem Client-Computer (1020, 10005) gesendet wird,
b) die Anwendung (1030, 1004), die benutzerspezifische Daten über einen dem Benutzer zugeordneten geographischen Ort (1061) und den Typ der Vorrichtung (1062), die dem Benutzer (1020) zugeordnet ist, aus einem Benutzerverzeichnis (1050, 10003) abruft,
c) die Anwendung (1030, 10004), die in Bezug auf die angeforderten Daten vorrichtungsspezifische Daten über den geographischen Ort und den Typ der Vorrichtung der mehreren Vorrichtungen abruft (10011), und ferner vorrichtungsspezifische Zeitdaten abruft, die den Verlauf des Ortes einer oder mehrerer jeweiliger spezifischer Vorrichtungen über Zeitintervalle reflektieren, die die Zeit angeben, während der die eine oder mehreren jeweiligen spezifischen Vorrichtungen an jeweils bestimmten Orten betrieben wurden,
d) die Anwendung (1030, 10004), die prüft (10012), ob der vorrichtungsspezifische geographische Ort und der Typ der Vorrichtung mit den jeweiligen benutzerspezifischen Daten übereinstimmen, und die prüft, ob die angeforderten zu verarbeitenden Daten mit den vorrichtungsspezifischen Zeitdaten übereinstimmende Zeitintervalle haben, und die auf dem Ergebnis der Übereinstimmung basiert,
e) Gewähren oder Verweigern (10016) des Zugriffs auf die angeforderte Datenverarbeitung für den Client-Computer (1020, 10005), wobei der Zugriff auf die angeforderten Daten für Zeitintervalle gewährt wird, die den benutzerspezifischen Daten zugeordnet sind.

10. Verfahren nach Anspruch 9 ferner umfassend:
- die Anwendung (1030, 10004), die Daten über eine oder mehrere Rollen (2120), die dem Benutzer (1020) zugeordnet sind, aus einem Benutzerverzeichnis (1050, 10003) abruft,
- die Anwendung (1030, 10004), die Daten über eine oder mehrere der angeforderten Datenverarbeitungen zugeordnete Rollen abruft, und das bevor der Zugriff auf die angeforderte Datenverarbeitung gewährt oder verweigert wird,
- die Anwendung (1030, 10004), die prüft, ob die Daten über die eine oder mehrere Rollen (2120) mit den Daten über die eine oder mehrere Rollen, die der angeforderten Datenverarbeitung zugeordnet sind, übereinstimmen.

11. Verfahren nach Anspruch 9 oder 10 umfassend:
- die Anwendung in Schritt d), die ein drittes Datenobjekt (2000) nach Anspruch 5 abfragt und prüft, ob die Daten über den geographischen Ort und den Typ der Vorrichtung der mehreren Vorrichtungen und die Daten über die eine oder mehrere Rollen, die der angeforderten Datenverarbeitung zugeordnet sind, mit den Daten (2110, 2120, 2130) in einem oder mehreren der zweiten Datenobjekte (2100, 2200, 2300), die in dem dritten Datenobjekt (2000) enthalten sind, übereinstimmen.

12. Verfahren nach einem der Ansprüche 9 bis 11, wobei sich Zeitintervalle in den vorrichtungsspezifischen Daten einer bestimmten Vorrichtung für geographische Orte auf derselben Ebene in einer Hierarchie von ersten Datenobjekten mit ersten Datenobjekten, die die benutzerspezifischen Daten über den geographischen Ort und den Typ der Vorrichtung koppeln, nicht überlappen dürfen.

13. Computerprogrammprodukt, das, wenn es in einen Speicher einer Rechenvorrichtung geladen und von mindestens einem Prozessor der Rechenvorrichtung ausgeführt wird, die Rechenvorrichtung in die Lage versetzt, ein Verfahren nach einem der Ansprüche 9 bis 12 durchzuführen.

## Revendications

1. Système informatique (1010) pour autoriser un utilisateur (1020) à traiter des données reçues d'un ou plusieurs dispositifs (1101, 1102, 1103, 1104) comprenant :
- un composant d'interface (1091) configuré pour recevoir lesdites données,
- un composant d'application (1030) configuré pour recevoir des demandes de l'utilisateur (1020), lesdites demandes comprenant une ou plusieurs demandes pour effectuer des opérations de traitement de données sur au moins un sous-ensemble desdites données,
- un composant de stockage et d'accès aux données (1070, 1080) configuré pour stocker et accéder auxdites données,
- un ou plusieurs composants d'évaluation (1030, 1110) configurés pour traiter lesdites données et
- un composant d'autorisation (1040) configuré pour accorder ou refuser à l'utilisateur (1020) l'accès au traitement d'au moins un sous-ensemble desdites données, ledit accord ou refus étant basé sur des données spécifiques à l'utilisateur stockées dans un répertoire d'utilisateurs (1050) pour un utilisateur enregistré et étant en outre basé sur des données spécifiques au dispositif liées auxdites données demandées,
lesdites données spécifiques à l'utilisateur comprenant :
- des données sur un emplacement géographique (1061) associé à l'utilisateur (1020) et des données sur le type d'un dispositif (1062) auquel l'utilisateur est autorisé à accéder, et
lesdites données spécifiques au dispositif comprenant :
- des données spécifiques au dispositif sur l'emplacement géographique et le type du dispositif de la pluralité de dispositifs, et
- des données temporelles spécifiques au dispositif reflétant l'historique de l'emplacement d'un ou de plusieurs dispositifs particuliers respectifs au moyen d'intervalles de temps spécifiant le temps pendant lequel le ou les dispositifs particuliers ont été utilisés à des endroits particuliers respectifs ;
le composant d'autorisation étant configuré en outre pour vérifier si l'emplacement géographique et le type de dispositif en question correspondent aux données spécifiques à l'utilisateur, et pour vérifier si les données à traiter ont des intervalles de temps associés qui correspondent aux données temporelles spécifiques au dispositif, l'accès aux données demandées étant accordé pour les données demandées dans des intervalles de temps associés aux données spécifiques à l'utilisateur.

2. Système selon la revendication 1, lesdites données spécifiques à l'utilisateur comprenant des données concernant un ou plusieurs rôles (2120, 2130) que l'utilisateur détient au sein d'une organisation.

3. Système selon la revendication 1 ou 2, les données spécifiques à l'utilisateur sur l'emplacement géographique et le type du dispositif étant couplées pour former un premier objet de données (2110).

4. Système selon la revendication 3, le premier objet de données (2110) et les données concernant le ou les rôles (2120, 2130) étant couplés pour former un deuxième objet de données et une pluralité de deuxièmes objets de données (2100, 2200, 2300) étant associés à l'utilisateur enregistré.

5. Système selon la revendication 4, la pluralité de deuxièmes objets de données (2100, 2200, 2300) étant couplés pour former un troisième objet de données (2000) associé à un utilisateur enregistré.

6. Système selon la revendication 3, les intervalles de temps dans les données spécifiques au dispositif d'un dispositif particulier n'étant pas autorisés à se chevaucher pour des emplacements géographiques au même niveau dans une hiérarchie de premiers objets de données.

7. Système selon l'une quelconque des revendications précédentes, les données spécifiques au dispositif concernant l'emplacement géographique et le type du dispositif étant couplées pour former un quatrième objet de données (6110).

8. Système selon la revendication 7, le quatrième objet de données (6110) et une ou plusieurs données temporelles étant couplés pour former un cinquième objet de données (6100) et une pluralité de cinquièmes objets de données (6100, 6200, 6300) étant couplés pour former un sixième objet de données (6000) associé à un dispositif.

9. Procédé mis en œuvre par ordinateur pour accorder ou refuser à un ordinateur client (1020), exploité par un utilisateur, l'accès à des données de traitement sur un système informatique (1010), lesdites données étant collectées à partir d'une pluralité de dispositifs (1101, 1102, 1103, 1104), le procédé comprenant des étapes :
a) une application (1030, 10004) recevant une demande (10010) de traitement desdites données, ladite demande (10010) étant envoyée par l'ordinateur client (1020, 10005),
b) l'application (1030, 1004) récupérant des données spécifiques à l'utilisateur sur un emplacement géographique (1061) associé à l'utilisateur et le type de dispositif (1062) associé à l'utilisateur (1020) à partir d'un répertoire d'utilisateurs (1050, 10003),
c) l'application (1030, 10004), en relation avec les données demandées, permettant d'extraire (10011) des données spécifiques au dispositif sur l'emplacement géographique et le type du dispositif de la pluralité de dispositifs, et d'extraire en outre des données temporelles spécifiques au dispositif reflétant l'historique de l'emplacement d'un ou de plusieurs dispositifs particuliers respectifs au moyen d'intervalles de temps spécifiant le temps pendant lequel le dispositif ou les dispositifs particuliers ont fonctionné à des emplacements particuliers respectifs,
d) l'application (1030, 10004) vérifiant (10012) si ledit emplacement géographique spécifique au dispositif et le type de dispositif correspondent aux données spécifiques de l'utilisateur, et vérifiant si les données à traiter ont des intervalles de temps associés qui correspondent aux données temporelles spécifiques au dispositif, et en fonction du résultat de la correspondance,
e) l'accord ou le refus (10016) à l'ordinateur client (1020, 10005) de l'accès au traitement de données demandé, l'accès aux données demandées étant accordé pour des intervalles de temps associés aux données spécifiques à l'utilisateur.

10. Procédé selon la revendication 9 comprenant en outre :
- l'application (1030, 10004) récupérant des données sur un ou plusieurs rôles (2120) associés à l'utilisateur (1020) à partir d'un répertoire d'utilisateurs (1050, 10003),
- l'application (1030, 10004) récupérant des données sur un ou plusieurs rôles associés au traitement des données demandé et, avant d'accorder ou de refuser l'accès au traitement des données demandé,
- l'application (1030, 10004) vérifiant si les données relatives au ou aux rôles (2120) correspondent aux données relatives au ou aux rôles associés au traitement des données demandé.

11. Procédé selon la revendication 9 ou 10 comprenant :
- l'application à l'étape d) qui consiste à interroger un troisième objet de données (2000) selon la revendication 5 et à vérifier si les données sur l'emplacement géographique et le type du dispositif de la pluralité de dispositifs et les données sur le ou les rôles associés au traitement de données demandé correspondent aux données (2110, 2120, 2130) dans un ou plusieurs des deuxièmes objets de données (2100, 2200, 2300) contenus dans ledit troisième objet de données (2000).

12. Procédé selon l'une quelconque des revendications 9 à 11, les intervalles de temps dans les données spécifiques au dispositif d'un dispositif particulier n'étant pas autorisés à se chevaucher pour des emplacements géographiques de même niveau dans une hiérarchie de premiers objets de données avec des premiers objets de données couplant les données spécifiques à l'utilisateur sur l'emplacement géographique et le type du dispositif.

13. Produit de programme informatique qui, lorsqu'il est chargé dans la mémoire d'un dispositif informatique et exécuté par au moins un processeur du dispositif informatique, permet au dispositif informatique de réaliser un procédé conformément à l'une quelconque des revendications 9 à 12.
